# FASCICULE DE BREVET EUROPEEN

(11) **EP 2 319 644 B1**
(45) Date de publication et mention de la délivrance du brevet: **23.09.2015**
(21) Numéro de dépôt: 10354072.0
(22) Date de dépôt: 05.11.2010
(51) Int. Cl.: B23B 27/14, B23B 29/04, B23B 51/04, B23Q 17/09, B23Q 17/24

(54) **Outil de coupe d'usinage**
Zerspannungswerkzeug
Machining cutting tool

(30) Priorité: 06.11.2009 FR 0905354
(43) Date de publication de la demande: 11.05.2011
(73) Titulaire: M D C, 73460 Frontenex (FR)
(72) Inventeur: Moris, Claude, 73200 Albertville (FR); Moris, Damien, 73200 Albertville (FR); Moris, Christophe, 73200 Albertville (FR)
(74) Mandataire: Hecké, Gérard

(56) Documents cités:
- EP-A1- 0 596 619
- DE-A1- 10 227 677
- FR-A- 1 216 733
- US-A- 2 575 173

## Description

### Domaine technique de l'invention

L'invention est relative à la détection de bris ou de limite d'usure d'un outil de coupe d'usinage.

### État de la technique

Au cours de son utilisation normale, un outil de coupe de machine-outil s'use. Lorsque l'usure atteint une limite, l'outil doit être changé pour que les conditions et la précision d'usinage restent optimales. Dans certaines circonstances, l'outil de coupe peut se briser, auquel cas, la machine-outil doit être arrêtée immédiatement.

Dans le cadre des productions en série et des usinages automatisés, il est important de pouvoir détecter la défaillance (limite d'usure atteinte ou bris) des outils de manière automatisée.

Une solution classique pour détecter une défaillance de l'outil de coupe consiste à établir un profil de référence de consommation de courant de la machine et de détecter la défaillance lorsque la consommation s'écarte trop de ce profil de référence.

Une autre solution consiste à comparer une signature du bruit engendré par l'outil de coupe à une signature de référence.

Dans un cas comme dans l'autre, la référence doit être établie en fonction de nombreux paramètres (nature de la pièce à usiner, nature de l'outil, vitesse de coupe, vitesse d'avance, température, nature du lubrifiant...), dont la variabilité impacte la fiabilité de la détection.

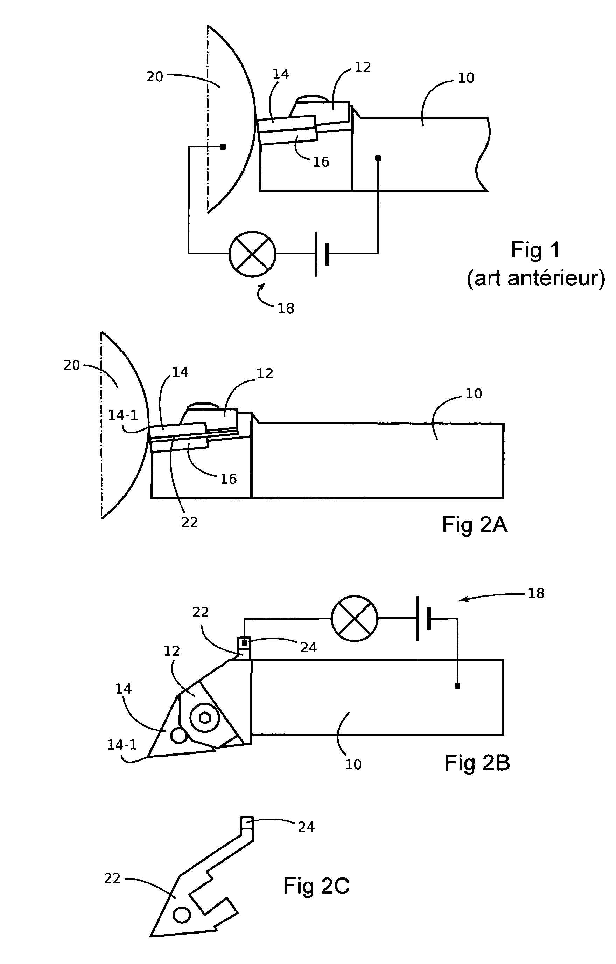

La figure 1 représente une solution décrite dans les documents RU2176175 et RU2205093 pour détecter une défaillance d'un outil de coupe de tour. Un corps d'outil 10 est muni à une extrémité d'une bride 12 servant à maintenir un empilement d'une plaquette de coupe 14 sur une contre-plaquette 16. La contre-plaquette 16 est insérée dans un logement du corps de l'outil 10, configurée pour que la plaquette de coupe 14 présente l'angle de coupe et la saillie souhaitées.

La plaquette de coupe 14 est en un matériau isolant, par exemple céramique, tandis que la contre-plaquette 16 et le corps de l'outil 10 sont métalliques.

Le corps de l'outil 10 est isolé électriquement par rapport à une pièce à usiner 20. Toutes les parties de la machine, y compris la pièce à usiner 20, étant généralement métalliques, on prévoit un isolant (non représenté) entre le corps de l'outil 10 et le chariot servant à déplacer l'outil.

Un circuit de détection de défaillance 18, représenté sous la forme d'une lampe en série avec une source de tension, mesure la continuité électrique entre le corps de l'outil 10 et la pièce en cours d'usinage 20.

Lorsque la plaquette 14 est en bon état, comme cela est représenté, la contre-plaquette 16 se trouve à l'écart de la pièce en cours d'usinage 20. Le circuit 18 ne mesure aucune continuité électrique, puisque la plaquette de coupe 14, en contact avec la pièce 20, est isolante.

Lorsque la plaquette 14 se brise, ou atteint une usure limite, la contre-plaquette vient en contact avec la pièce en cours d'usinage 20, et un circuit électrique s'établit entre le corps de l'outil 10 et la pièce 20. Le circuit 18 détecte la continuité électrique et signale la défaillance.

Sur le papier, cette solution semble nettement plus fiable et simple à mettre en oeuvre que les solutions utilisant des profils de consommation ou de bruit. Dans un environnement réel, cette solution s'avère toutefois peu fiable. Elle nécessite en outre une modification de la machine, notamment du chariot porte-outil, pour isoler électriquement le corps de l'outil du reste de la machine.

Dans le brevet français FR-1 216 733, qui divulgue un outil de coupe d'usinage selon le préambule de la revendication 1, il est proposé de signaler une rupture d'outil au moyen d'un fil électrique qui est monté dans un alésage du porte-outil de manière qu'une extrémité dénudée de ce fil soit en saillie derrière l'outil à surveiller et que, lors d'une rupture d'outil, un contact s'établisse entre cette extrémité dénudée et la pièce en cours d'usinage en se traduisant par la fermeture d'un circuit électrique. Par ailleurs, un capuchon est monté sur l'extrémité dénudée du fil électrique.

### Résumé de l'invention

Il subsiste donc le besoin de prévoir un système de mesure de défaillance d'un outil de coupe qui soit fiable et simple à mettre en oeuvre.

Pour satisfaire ce besoin, on prévoit un outil de coupe d'usinage selon la revendication 1 comportant un corps, une plaquette de coupe et un capteur de défaillance d'usinage pour plaquette de coupe, distinct de la plaquette de coupe, configuré pour être monté de manière amovible à proximité du bord de coupe de la plaquette et en retrait par rapport au bord de coupe, le capteur étant en un matériau électriquement conducteur enrobé d'un isolant au voisinage du bord de coupe et de manière à isoler le capteur, une fois monté, du corps de l'outil de coupe et de la plaquette, et comprenant une zone dénudée d'isolant éloignée du bord de coupe et formant une borne de connexion électrique. En outre, ledit outil de coupe d'usinage comporte un circuit de détection de continuité connecté directement entre la borne de connexion du capteur et le corps de l'outil.

Selon un mode de réalisation, le capteur de l'outil de coupe d'usinage peut être sous la forme d'une plaque à monter entre une plaquette de coupe et le corps de l'outil.

Préférentiellement, le capteur est sous la forme d'une plaque montée entre une plaquette de coupe et le corps de l'outil, cette plaque comportant une zone qui épouse le contour de la plaquette de coupe et qui est susceptible d'entrer en contact avec la pièce à usiner.

Selon un mode de réalisation, le capteur de l'outil de coupe d'usinage peut être sous la forme d'un insert à monter dans une gorge du corps de l'outil.

On prévoit en outre un outil de coupe du type susmentionné, et dont préférentiellement le circuit de détection est incorporé à l'outil et comprend un système de transmission sans fil de la détection de continuité. De manière préférentielle, le système de transmission est passif.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, parmi lesquels :
- la figure 1, précédemment décrite, représente un système classique de détection de défaillance d'outil de coupe ;
- les figures 2A à 2C représentent plusieurs vues d'un outil de coupe de tour équipé d'un mode de réalisation de dispositif de détection de défaillance, et un exemple de capteur de défaillance ;
- les figures 3A à 3C représentent plusieurs vues d'un outil de tronçonnage et un autre exemple de capteur de défaillance ;
- les figures 4A et 4B représentent un foret et un autre exemple de capteur de défaillance ; et
- les figures 5A à 5D représentent des variantes de plaquettes de coupe et de capteurs de défaillance intégrés.

### Description d'un mode de réalisation préféré de l'invention

Comme on l'a précédemment évoqué, le système de détection de défaillance d'outil de coupe de la figure 1 est peu fiable dans des conditions de travail réelles. En particulier, dans des conditions de coupe normales, on utilise du lubrifiant en émulsion aqueuse qui est aspergé en permanence dans la zone de coupe. Il en résulte inévitablement un établissement de circuit électrique intempestif entre la contre-plaquette 16 et la pièce en cours d'usinage 20, passant par la pellicule de lubrifiant déposée sur la plaquette de coupe 14. En outre, les copeaux retirés sur la pièce 20 sont évacués de manière incontrôlable et risquent de mettre en contact la pièce 20 et la contre-plaquette 16 ou le corps de l'outil 10.

Les figures 2A à 2C représentent un outil de coupe de tour équipé d'un mode de réalisation de système de détection de défaillance évitant ce défaut.

Les figures 2A et 2B représentent respectivement une vue de côté et de dessus de l'outil de coupe de tour. On y retrouve des mêmes éléments qu'à la figure 1, désignés par des mêmes références.

Le système de détection de défaillance comprend, dans ce mode de réalisation, une plaque capteur 22 disposée entre la plaquette de coupe 14 et la contre-plaquette 16. Cette plaque est en un matériau électriquement conducteur enrobé d'un isolant. L'isolant est prévu pour isoler la plaque électriquement de tout élément métallique du bâti de la machine, notamment des plaquettes 14 et 16, qui peuvent toutes deux être métalliques, et du corps 10 de l'outil.

Il n'est pas nécessaire que la totalité de la plaque 22 soit enrobée d'isolant. Elle est de préférence enrobée sur ses zones en contact avec des parties métalliques servant au maintien de la plaque, et au voisinage du bord de coupe 14-1 de l'outil. Ainsi, il n'y a aucun risque que du lubrifiant ou des copeaux perturbent le fonctionnement du système de détection par l'établissement d'un circuit électrique intempestif entre la pièce 20 et la plaque 22.

A la figure 2B, en vue de dessus de l'outil de coupe, on observe que la plaque 22 épouse la forme de la plaquette de coupe 14. De préférence, la plaque 22 épouse la forme de la plaquette de coupe au niveau de ses parties susceptibles d'entrer en contact avec la pièce à usiner. Une partie en saillie de la plaque 22, du côté opposé au bord de coupe de l'outil, présente une zone dénudée d'isolant 24 servant de borne de connexion d'un circuit de détection de continuité 18. Une autre borne de ce circuit est en contact électrique avec la pièce à usiner. La pièce à usiner étant généralement en contact électrique avec le porte-outil de la machine par l'intermédiaire d'une chaîne d'éléments métalliques de la machine, et ce porte-outil étant lui-même en contact avec le corps de l'outil, il suffit que cette autre borne du circuit 18 soit connectée au corps 10 de l'outil, comme cela est représenté.

La figure 2C illustre un exemple de forme de la plaque 22, adaptée à l'outil de coupe de tour des figures 2A et 2B. Elle comporte une zone épousant le contour de la plaquette de coupe 14, une extension allant vers la zone dénudée 24, et des extensions venant de part et d'autre d'une vis servant à serrer la bride 12 sur le corps de l'outil.

Avec cette configuration, comme on peut le voir plus précisément à la figure 2A, le bord de la plaque 22 à l'aplomb du bord de coupe de la plaquette 14, du fait de l'angle de la plaquette 14, se trouve légèrement en retrait par rapport à la pièce en cours d'usinage 20. L'enrobage isolant de la plaque 22 dans cette zone garantit qu'aucun circuit électrique ne puisse s'établir entre le coeur conducteur de la plaque 22 et la pièce en cours d'usinage 20, par l'intermédiaire de lubrifiants ou de copeaux.

Lorsque la plaquette 14 est usée, ou bien se brise, au point où la plaque 22 vient en contact avec la pièce 20, l'isolant est entamé par la pièce en cours d'usinage 20. La pièce 20 finit par enlever l'épaisseur d'isolant localement et entrer en contact avec le coeur conducteur de la plaque 22. Le circuit 18 détecte alors la fermeture du circuit électrique et signale la défaillance.

La plaque 22 a été représentée à titre d'exemple comme affleurant la plaquette de coupe 14. Cette plaque 22 peut être prévue en retrait ou en saillie par rapport à cette position, en fonction du degré d'usure que l'on souhaite détecter avec le système.

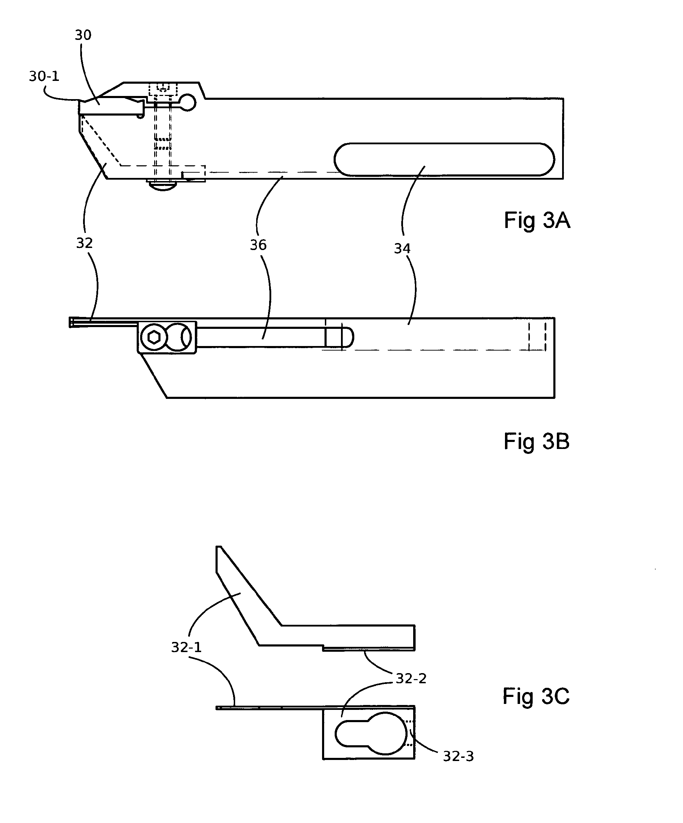

Les figures 3A à 3C représentent un outil de tronçonnage équipé d'un mode de réalisation adapté de dispositif de détection de défaillance.

Les figures 3A et 3B représentent respectivement une vue de côté et de dessous de l'outil de tronçonnage. Un tel outil s'utilise sur un tour. Une de ses particularités par rapport à l'outil de tour des figures 2A et 2B est l'étroitesse de sa plaquette de coupe 30, comme cela est visible sur la vue de la figure 3B. Il en résulte qu'il est peu commode de loger une plaque capteur (22) comme cela a été décrit aux figures 2A et 2B.

On prévoit ici un insert capteur 32 fixé à la partie inférieure du corps de l'outil, et qui s'étend en périphérie (selon la vue de la figure 3B) vers le bord de coupe 30-1 de l'outil, dans une gorge ménagée dans la partie du corps sous la plaquette 30.

La figure 3C représente l'insert capteur 32 isolément en vue de côté et de dessous. Cet insert comporte une partie plate verticale en L 32-1, destinée à être glissée dans la rainure ménagée dans le corps de l'outil sous la plaquette 30. L'insert comporte en outre une partie repliée à 90° 32-2, servant à fixer l'insert par vis à une partie large du corps de l'outil. Cette partie repliée comprend une ouverture oblongue dans l'axe de l'outil pouvant servir à régler l'écart entre le bord de coupe 30-1 de l'outil et l'extrémité proximale de l'insert 32, afin de déterminer le niveau d'usure qui déclenchera la détection de défaillance. Comme cela est représenté, l'ouverture oblongue peut comporter une partie élargie servant à laisser passer la tête de la vis de fixation pour faciliter le montage.

L'ensemble de l'insert 32 est enrobé d'un isolant, sauf dans une zone de prise de contact 32-3 au niveau de la partie repliée 32-2.

Comme cela est représenté aux figure 3A et 3B, on prévoit dans le corps de l'outil un logement 34, ouvert sur une face latérale du corps. Ce logement 34 est destiné à recevoir un circuit de détection de continuité électrique qui pourra être relié à la zone dénudée de l'insert 32 par un fil logé dans une gorge 36 réalisée dans la face inférieure du corps de l'outil. Le circuit est par ailleurs relié au corps de l'outil à l'intérieur même du logement 34. Les connexions électriques à la zone dénudée de l'insert et au corps de l'outil pourront être établies par des bornes de contact à ressort.

On s'aperçoit que le circuit de détection peut ainsi être logé dans le corps de l'outil sans nécessiter des connexions externes à d'autres parties de la machine. Si le corps de l'outil ne comporte pas de logement 34, le circuit de détection pourra être fixé sur l'une des parois du corps de l'outil.

Afin d'assurer la fonction de signalement d'une défaillance, on prévoit de préférence une communication sans fil vers un système de commande de la machine, ou bien vers un boîtier dédié. Cette communication peut se faire par ondes radio en munissant le circuit d'une petite pile. On peut également prévoir un circuit de détection sous la forme d'un élément de transmission passif, c'est-à-dire ne nécessitant pas d'alimentation électrique intégrée, comme cela est connu de la technologie « RF ID ».

On remarque donc qu'un tel système de détection de défaillance ne nécessite aucune modification de la machine-outil. On pourra notamment l'installer sur des machines-outils existantes sans surcoût.

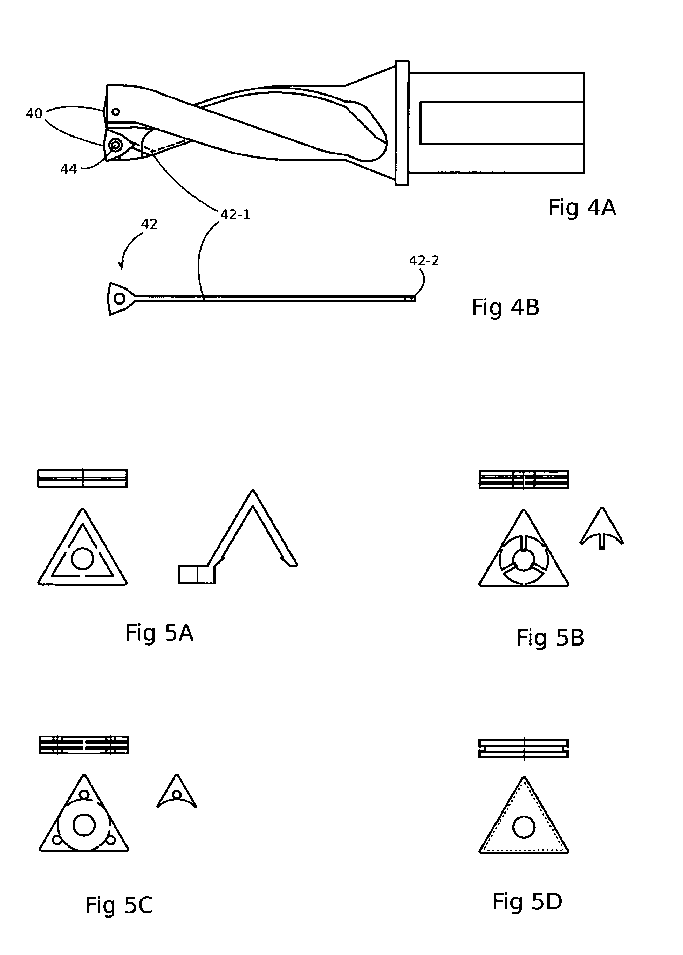

Les figures 4A et 4B représentent respectivement un foret équipé d'un mode de réalisation de dispositif de détection de défaillance, et un insert capteur adapté.

A la figure 4A, un foret comporte deux bords de coupe à 180°, dont chacun est muni d'une plaquette de coupe 40. L'une des plaquettes, partiellement visible, est disposée au centre du bord de coupe et sert à usiner le fond du trou. La deuxième plaquette est disposée à l'extrémité du bord de coupe, et sert à usiner la paroi du trou. Cette deuxième plaquette tend à s'user plus vite que la première. Par conséquent, on pourra se contenter de ne contrôler l'usure que de la deuxième plaquette. Entre cette deuxième plaquette 40 et le corps du foret, on a disposé un élément capteur 42 sous la forme d'une plaque épousant le contour de la plaquette 40, comme pour l'outil de tour des figures 2A et 2B. La plaquette est fixée sur le corps du foret par une vis 44 qui traverse également la plaque capteur 42.

Comme cela est représenté à la figure 4B, la plaque capteur 42 comporte une extension allongée 42-1, sous la forme d'un conducteur, se terminant par une zone dénudée 42-2 servant à connecter un circuit de détection de continuité électrique. Le reste du capteur 42 est bien entendu enrobé d'un isolant.

Le conducteur 42-1 est logé dans une gorge pratiquée dans le corps du foret, arrivant sur une zone à l'écart des bords de coupe, où l'on peut connecter le circuit de détection. Ce circuit de détection pourra, comme décrit en relation avec les figures 3A et 3B, être aménagé dans un logement du corps du foret et communiquer sans contact avec un système de commande de l'outil.

Une fraise pourra être équipée d'un capteur d'usure de manière similaire à un foret.

Les figures 5A à 5D représentent des variantes de plaquettes de coupe triangulaires intégrant des inserts capteurs. Dans chacune de ces figures, on représente la plaquette en vue de côté et de dessus, et l'insert correspondant isolément.

A la figure 5A, la plaquette comporte une gorge périphérique centrale, faisant tout le tour de la plaquette. L'insert correspondant est sous la forme d'un chevron comportant une extension latérale dénudée servant de prise de contact. A chaque fois qu'une pointe de la plaquette est usée, on remonte la plaquette en la faisant pivoter de 120°, et on remplace l'insert par un insert neuf.

A la figure 5B, la plaquette est destinée non seulement à être pivotée de 120° à chaque fois qu'une pointe s'use, mais aussi à être retournée une fois qu'on a usé les trois pointes d'une face. Elle comporte deux séries de gorges au niveau des pointes, respectivement à un tiers et à deux tiers de la hauteur. On prévoit deux inserts par pointe, à loger dans les gorges de manière permanente.

Les inserts sont sous forme de pointe de flèche. La queue de la flèche est dénudée et parvient à un trou central de la plaquette, où une tige traversant la plaquette établit le contact avec les parties dénudées des inserts.

Chaque insert qui a servi à détecter la défaillance de la pointe correspondante est retirée lorsque la plaquette est repositionnée. On évite ainsi des détections de défaillance intempestives provoquées par du lubrifiant venant couler sur l'insert dont l'isolant a été détruit.

La figure 5C représente une variante de la plaquette de la figure 5B. Les inserts n'ont plus de queue dénudée mais un trou central dont le pourtour est dénudé. Une tige passant dans un trou correspondant, au niveau de chaque pointe de la plaquette, établit le contact avec les deux inserts montés au niveau de cette pointe.

La figure 5D représente une plaquette comprenant une gorge périphérique centrale de section circulaire. Cette gorge circulaire est destinée à recevoir un capteur sous la forme d'un conducteur cylindrique.

Dans le cas d'une plaquette céramique, ou autre matériau isolant, le conducteur peut être noyé dans la plaquette lors d'une étape de fabrication de la plaquette. Le conducteur sera inséré légèrement en retrait par rapport aux parois de la plaquette pour que de la matière céramique, destinée à assurer l'isolation du conducteur, soit interposée entre le conducteur et l'extérieur.

Si la plaquette est métallique, on utilisera un conducteur émaillé, par exemple un fil du type utilisé dans le bobinage de transformateurs. La gorge comportera des parties élargies facilitant l'insertion du fil. Ce genre de gorge à section circulaire est réalisable par électroérosion.

Selon une variante non représentée, l'élément capteur est constitué par la plaquette de coupe elle-même. On prévoit alors une plaquette en matériau conducteur revêtu d'une couche d'isolant résistant à l'abrasion, par exemple de la céramique ou du diamant. L'épaisseur du revêtement isolant détermine ainsi directement le taux d'usure à détecter.

Pour les autres cas d'éléments capteurs décrits ici, on peut utiliser, à titre d'exemple, de l'aluminium ou du titane anodisé.

De nombreuses variantes et modifications des modes de réalisation décrits ici apparaîtront à l'homme du métier.

## Revendications

1. Outil de coupe d'usinage (10) comportant :
un corps ;
une plaquette de coupe (14, 30, 40) ;
• un capteur de défaillance d'usinage (22, 32, 42) pour plaquette de coupe (14, 30, 40), distinct de la plaquette de coupe, configuré pour être monté de manière amovible à proximité du bord de coupe (14-1, 30-1) de la plaquette et en retrait par rapport au bord de coupe, le capteur étant en un matériau électriquement conducteur enrobé d'un isolant au voisinage du bord de coupe et de manière à isoler le capteur, une fois monté, du corps de l'outil de coupe (10) et de la plaquette, et comprenant une zone dénudée d'isolant (24, 32-3, 42-2) éloignée du bord de coupe et formant une borne de connexion électrique ; et
**caractérisé par**:
• un circuit de détection de continuité (18) connecté directement entre la borne de connexion (24, 32-3, 42-2) du capteur et le corps de l'outil.

2. Outil de coupe selon la revendication 1, **caractérisé en ce que** le capteur est sous la forme d'une plaque (22) à monter entre une plaquette de coupe (14) et le corps de l'outil.

3. Outil de coupe selon la revendication 1, **caractérisé en ce que** le capteur est sous la forme d'un insert (32) à monter dans une gorge du corps de l'outil.

4. Outil de coupe selon la revendication 1, **caractérisé en ce que** le circuit de détection (18) est incorporé à l'outil et comprend un système de transmission sans fil de la détection de continuité.

5. Outil de coupe selon la revendication 4, **caractérisé en ce que** le système de transmission est passif.

6. Outil de coupe d'usinage selon la revendication 2, **caractérisé en ce que** le capteur est sous la forme d'une plaque (22) montée entre une plaquette de coupe (14) et le corps de l'outil, cette plaque (22) comportant une zone qui épouse le contour de la plaquette de coupe (14) et qui est susceptible d'entrer en contact avec la pièce à usiner.

## Patentansprüche

1. Zerspanungswerkzeug (10), das umfasst:
einen Körper;
eine Zerspanungsplatte (14, 30, 40) ;
• einen Bearbeitungsausfallsensor (22, 32, 42) für eine Zerspanungsplatte (14, 30, 40), getrennt von der Zerspanungsplatte, der so vorgesehen ist, dass er nahe dem Schneidrand (14-1, 30-1) der Zerspanungsplatte abnehmbar und zurückspringend gegenüber dem Schneidrand montiert wird, wobei der Sensor aus einem elektrisch leitenden Material besteht, das nahe der Schneidkante von Isoliermaterial umgeben ist, um den montierten Sensor gegenüber dem Körper des Zerspanungswerkzeugs (10) und der Platte zu isolieren, und der einen nicht isolierten Bereich (24, 32-3, 42-2) umfasst, der entfernt von der Zerspanungskante vorgesehen ist und eine Elektroanschlussklemme bildet; und
**gekennzeichnet durch**:
• eine Kontinuitätserfassungsschaltung (18), die direkt zwischen die Anschlussklemme (24, 32-3, 42-2) des Sensors und den Körper des Werkzeugs geschaltet ist.

2. Zerspanungswerkzeug nach Anspruch 1, **dadurch gekennzeichnet, dass** der Sensor in Form einer Platte (22) vorgesehen ist, die zwischen einer Zerspanungsplatte (14) und dem Körper des Werkzeugs montiert wird.

3. Zerspanungswerkzeug nach Anspruch 1, **dadurch gekennzeichnet, dass** der Sensor in Form eines Einsatzes (32) vorgesehen ist, der in einer Vertiefung des Körpers des Werkzeugs montiert wird.

4. Zerspanungswerkzeug nach Anspruch 1, **dadurch gekennzeichnet, dass** die Erfassungsschaltung (18) in dem Werkzeug eingebaut ist und ein drahtloses Übertragungssystem der Kontinuitätserfassung umfasst.

5. Zerspanungswerkzeug nach Anspruch 4, **dadurch gekennzeichnet, dass** das Übertragungssystem passiv ist.

6. Zerspanungsbearbeitungswerkzeug nach Anspruch 2, **dadurch gekennzeichnet, dass** der Sensor in Form einer Platte (22) vorgesehen ist, die zwischen einer Zerspanungsplatte (14) und dem Körper des Werkzeugs vorgesehen ist, wobei diese Platte (22) einen Bereich umfasst, der sich den Umrissen der Zerspanungsplatte (14) anpasst und mit dem zu bearbeitenden Werkstück in Kontakt kommen kann.

## Claims

1. Machining cutting tool (10) comprising:
a body;
a cutting insert (14, 30, 40) ;
• a machining failure sensor (22, 32, 42) for the cutting insert (14, 30, 40), distinct from the cutting insert, configured to be removably mounted close to the cutting edge (14-1, 30-1) of the insert and set back relative to the cutting edge, the sensor being made out of an electrically conductive material coated with an insulator in the vicinity of the cutting edge so as to isolate the sensor, once mounted, from the body of the cutting tool (10) and the insert, and comprising an uninsulated zone (24, 32-3, 42-2) remote from the cutting edge and forming an electrical connection terminal; and
**characterized by**:
• a continuity detection circuit (18) directly connected between the connecting terminal (24, 32-3, 42-2) of the sensor and the body of the tool.

2. Cutting tool according to claim 1, **characterized in that** the sensor is in the form of a plate (22) to be mounted between a cutting insert (14) and the body of the tool.

3. Cutting tool according to claim 1, **characterized in that** the sensor is in the form of an insert (32) to be mounted in a groove of the tool body.

4. Cutting tool according to claim 1, **characterized in that** the detection circuit (18) is integrated in the tool and includes a wireless transmission system for the continuity detection.

5. Cutting tool according to claim 4, **characterized in that** the transmission system is passive.

6. Machining cutting tool according to claim 2, **characterized in that** the sensor is in the form of a plate (22) mounted between a cutting insert (14) and the tool body, said plate (22) having a zone matching the contour of the cutting insert (14) and able to contact the workpiece.
